# EUROPÄISCHE PATENTSCHRIFT

(11) **EP 0 633 744 B1**
(45) Veröffentlichungstag und Bekanntmachung des Hinweises auf die Patenterteilung: **08.01.1997**
(21) Anmeldenummer: 93903983.0
(22) Anmeldetag: 17.02.1993
(51) Int. Cl.: A47J 31/44

(54) **KAFFEEMASCHINE ZUR VORWÄRMUNG UND WARMHALTUNG VON TASSEN**
COFFEE MACHINE FOR PREHEATING CUPS AND KEEPING THEM WARM
MACHINE A CAFE AVEC PRECHAUFFAGE ET MAINTIEN DES TASSES AU CHAUD

(30) Priorität: 02.04.1992 DE 4210886
(43) Veröffentlichungstag der Anmeldung: 18.01.1995
(73) Patentinhaber: Braun Aktiengesellschaft, 60326 Frankfurt am Main (DE)
(72) Erfinder: KLAWUHN, Manfred, D-60322 Frankfurt am Main (DE); HUFNAGL, Walter, D-65843 Sulzbach (DE); MÜLLER, Roland, D-63303 Dreieich (DE); SCHÄFER, Gerhard, D-60437 Frankfurt am Main (DE); PETER, Andreas, D-61476 Kronberg (DE)
(86) Internationale Anmeldenummer: EP9300375
(87) Internationale Veröffentlichungsnummer: WO9319656

(56) Entgegenhaltungen:
- EP-A- 0 511 945
- CH-A- 596 811
- GB-A- 793 944
- GB-A- 2 059 753
- US-A- 3 949 733

## Beschreibung

Die Erfindung betrifft eine Kaffeemaschine nach dem Oberbegriff des Anspruchs 1.

Damit ein Heißgetränk nicht schon kurze Zeit nach dem Einfüllen in eine Tasse durch Wärmeübertragung auf die Tasse abgekühlt ist und dadurch an Geschmack verliert, empfiehlt es sich, die Tasse vorzuwärmen. Dies ist insbesondere dann sinnvoll, wenn die Menge des eingefüllten Heißgetränks in Relation zum Volumen der Tasse relativ gering ist, wie dies beispielsweise bei Espresso der Fall ist.

Eine bekannte Kaffeemaschine zur Vorwärmung und Warmhaltung von Tassen, die bevorzugt bei einer Espressomaschine zum Einsatz kommt, besteht aus einer durch eine Wärmequelle beheizbaren Abstellfläche aus Edelstahl oder dergleichen, auf die eine oder mehrere zu erwärmende Tassen abgestellt und durch Wärmeübertragung erwärmt und warmgehalten werden können. Aus Sicherheitsgründen sollte die Temperatur der Abstellfläche 40 - 50 Grad Celsius nicht überschreiten, um eine Gefährdung des Benutzers durch Verbrennung bei versehentlicher Berührung der Abstellfläche zu vermeiden. Bedingt durch die somit relativ niedrige Temperatur der Abstellfläche ist folglich auch die auf die Tasse übertragene Wärmemenge relativ gering, so daß eine Vorwärmung der Tasse verhältnismäßig lange dauert.

Weiterhin ist aus dem Prospekt "Espresso Novo", Nr. 46348 vom Juni 1988 der Firma Krups Stiftung & Co. KG, Solingen, eine Kaffeemaschine bekannt, die insbesondere zum Herstellen von Espressogetränken dient. Bei dieser Kaffeemaschine ragt seitlich am Gehäuse eine mit einem Ventil versehene Dampfdüse heraus, die normalerweise zum Erwärmen und Aufschäumen von Flüssigkeiten, vorzugsweise Milch, dient. Wie in dem Prospekt beschrieben ist, kann der aus dem Dampfrohr austretende Dampf auch zur Erwärmung einer Tasse dienen, wenn diese direkt unter den heißen Dampfstrahl gestellt wird. Allerdings muß, wie in dem Prospekt beschrieben, zur anschließenden Herstellung eines Espressos die Kaffeemaschine unbedingt auf die Kaffeetemperatur abgekühlt werden. In diesem Zeitraum kühlt aber die Tasse wieder so stark aus, daß der Vorteil der Vorwärmung nahezu wieder aufgehoben wird. Da es mit dieser Anordnung nicht möglich ist, mehrere Tassen ständig betriebswarm zu halten, so können auch nicht mehrere Tassen gleichzeitig mit einem Espressogetränk gefüllt werden, wenn die Tassen vorgewärmt sein sollen.

Aus der GB-A-793,944 ist eine Kaffeemaschine mit einer Vorrichtung zur Erwärmung von mindestens einer auf einer Abstellfläche abgestellten Tasse bekannt. Bei dieser Vorrichtung besteht die Abstellfläche aus einem "perforated screen" 38 (siehe Seite 3, linke Spalte, Zeile 41). Beim Bedampfen der Tasse 37 wird diese durch das perforierte Sieb 38 immer auch von der Außenseite her mit Dampf beaufschlagt.

Der Erfindung liegt die Aufgabe zugrunde, eine Kaffeemaschine der eingangs genannten Art zu schaffen, die es mit einfachen Mitteln ermöglicht, eine oder mehrere Tassen in möglichst kurzer Zeit auf eine geeignete Temperatur vorzuwärmen und diese dann auf dieser Temperatur warm zu halten.

Diese Aufgabe wird erfindungsgemäß durch die Merkmale des kennzeichnenden Teils des Anspruchs 1 gelöst. Bei der erfindungsgemäßen Vorrichtung erwärmt der in das Tasseninnere strömende und/oder die Tasse(n) von außen umströmende Wasserdunst und/oder Wasserdampf die Tasse(n) durch Konvektion und Kondensation. Der Wärmeübergang erfolgt in einer sehr günstigen Weise und je nach Erwärmung des Wassers im Wasserbehälter kann die Tasse in sehr kurzer Zeit auf die gewünschte Temperatur vorgewärmt werden. Durch die bei der Anströmung der Tasse(n) durch Wasserdampf oder Wasserdunst eintretende Kondensation, wenn die Temperatur der Tasse noch erheblich geringer ist als die Temperatur des Wasserdampfes, trägt noch die dabei eintretende zusätzliche Kondensationswärme zur Temperaturerhöhung der Tasse(n) bei.

Zur besonders einfachen Erzeugung von Wasserdunst oder Wasserdampf nach den Merkmalen des Anspruchs 2 ergibt sich, daß der Wasserdampf in einem nach oben offenen Wasserbehälter erzeugt wird, der sich unterhalb der Abstellfläche befindet. Durch Erhitzen des Wassers in dem Wasserbehälter bildet sich je nach Temperatur Wasserdunst oder Wasserdampf, der durch die Austrittsöffnung in der Abstellfläche nach oben in das Innere einer Tasse strömt und diese aufwärmt, wenn die Tasse mit ihrem die Öffnung bildenden Rand auf der Abstellfläche aufliegt.

Gemäß den Merkmalen des Anspruchs 3 fließt das Kondenswasser auf die Abstellfläche, sammelt sich wegen ihrer Neigung am tiefsten Punkt und fließt von dort in den Wasserbehälter. In einer bevorzugten Ausgestaltung können auch zwei Platten der Abstellfläche zueinandergeneigt sein (Anspruch 3).

In einer bevorzugten Ausgestaltung der erfindungsgemäßen Vorrichtung ist vorgesehen, daß die Abstellfläche aus zwei oder mehreren entgegengesetzt geneigten Flächenabschnitten oder Platten besteht (Anspruch 4).

Damit das sich im Tasseninneren durch den Temperaturunterschied zwischen Tasse und Wasserdunst bzw. Wasserdampf zwangsläufig niederschlagende Kondenswasser ablaufen und in einer darunterliegenden Wanne wieder aufgefangen werden kann, sin die Merkmale des Anspruchs 5 vorgesehen.

Als Auffangvorrichtung können eine oder mehrere Ablauföffnungen in der Abstellfläche und/oder eine Rinne vorgesehen sein, die in einen zusätzlichen Auffangbehälter oder eine Wanne münden (Anspruch 6).

In einer alternativen Ausgestaltung sind die Merkmale des Anspruchs 7 vorgesehen. Dies hat den Vorteil, daß die erfindungsgemäße Vorrichtung an einen Druckboiler oder einen Thermoblock als Dampferzeuger anschließbar ist. Der dort gebildete Wasserdampf wird in die Dampfverteilkammer geleitet und kann von da durch die Austrittsöffnung in der Abstellfläche ausströmen. Bei dieser Ausführungsform ist kein separater offener Wasserbehälter erforderlich.

Die Erfindung sieht weiterhin vor, daß die Austrittsöffnung in der Abstellfläche durch eine Klappe oder ein Ventil verschließbar ist (Anspruch 8). Dies hat den Vorteil, daß bei Nichtgebrauch weniger oder kein Wasserdunst oder Wasserdampf entweichen kann, so daß nicht so oft Wasser nachgefüllt werden muß. Weiterhin wird bei geschlossener Klappe ein Eindringen von Schmutz in den offenen Kessel bzw. Wasserbehälter vermieden.

In einer vorteilhaften Ausgestaltung der erfindungsgemäßen Vorrichtung ist vorgesehen, daß die Klappe oder das Ventil beim Aufstellen einer Tasse auf die Aufstellfläche durch die Tasse in ihre Offenstellung bewegt wird (Anspruch 9). Auf diese Weise ist sichergestellt, daß die Klappe oder das Ventil nur dann offen ist und die Austrittsöffnung für den Austritt von Wasserdunst und Wasserdampf freigibt, wenn dies für das Erwärmen und Warmhalten einer Tasse erforderlich ist.

Damit die Austrittsöffnung stets von selbst wieder verschlossen wird, sobald die Tasse für den Gebrauch weggenommen worden ist, können verschiedenartige Mittel vorgesehen sein, die die Klappe oder das Ventil in die Schließstellung zurückbewegen. Nach einem bevorzugten Vorschlag der Erfindung ist vorgesehen, daß die Klappe oder das Ventil durch eine Feder in ihrer Schließstellung gehalten werden, wobei die Federkraft durch das Gewicht einer Tasse überwindbar ist (Anspruch 10). Dies hat außerdem den Vorteil, daß im Falle des Umkippens des Geräts der Benutzer gegen ein schlagartiges Entweichen von Wasser geschützt ist, da die Klappe oder das Ventil sofort nach dem Abrutschen der Tasse selbsttätig schließt. Allerdings sollte dann der zwischen dem Wasserbehälter und der Abstellfläche gebildete Raum seitlich durch Wände abgedichtet sein, um ein Eindringen von Dampf oder Wasser in den elektrischen Bereich zu vermeiden, so daß Kurzschlüsse nicht eintreten.

Es kann erfindungsgemäß auch vorgesehen sein, daß die Austrittsöffnung in der Abstellfläche direkt mit einem von der Wärmequelle gespeisten Dampferzeuger in Verbindung steht (Anspruch 11). Zur ausschließlichen Tassenvorwärmung kann der Thermoblock oder der Druckboiler mit reduzierter Energiezufuhr erwärmt werden, z.B. durch Betätigen eines Schalters.

Die Erfindung läßt sich besonders einfach durchführen, wenn der Wasserbehälter nach oben zur Tasse hin ständig offen ist (Anspruch 12). Dabei ist es vorteilhafter, wenn die Größe der Abstellfläche an die Größe der Öffnung des Wasserbehälters angepaßt ist (Anspruch 13).

Die Erfindung wird nachfolgend anhand von Ausführungsbeispielen näher erläutert, die in der Zeichnung dargestellt sind. Es zeigen
- Fig. 1: eine Schnittdarstellung einer Ausführungsform der erfindungsgemäßen Vorrichtung und
- Fig. 2: eine Schnittdarstellung einer weiteren Ausführungsform der erfindungsgemäßen Vorrichtung.

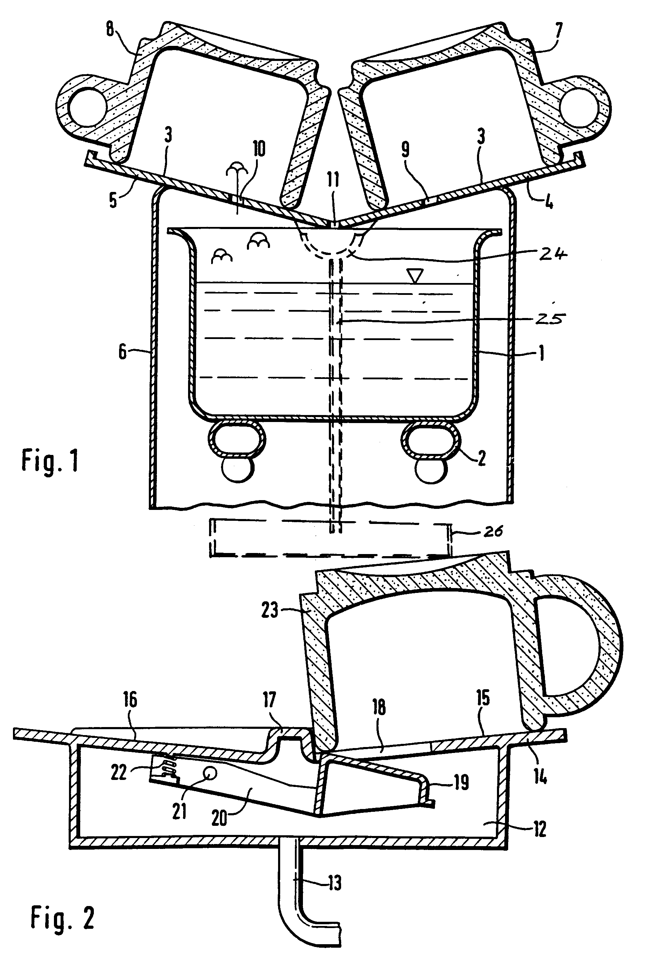

Figur 1 zeigt eine Vorrichtung zum Vorwärmen und Warmhalten von Tassen mit einem nach oben offenen Wasserbehälter 1, in dem Wasser durch eine am Boden des Wasserbehälters 1 vorgesehene Heizspirale 2 erhitzt werden kann. Über der Öffnung des Wasserbehälters 1 ist eine Abstellfläche 3 angeordnet, die von zwei V-förmig zueinander geneigten, gleichgroßen Platten 4, 5 gebildet wird, die auf einem Gehäuse 6, das den Wasserbehälter 1 umgibt, ruhen. Die Größe der Abstellfläche 3 an die Größe des Wasserbehälters 1 angepaßt. In der Zeichnung sind lediglich zwei Tassen 7, 8 dargestellt, von denen sich jede auf einer der Platten 4, 5 befindet. Selbstverständlich kann die Abstellfläche 3 so groß bemessen sein, daß auch eine größere Zahl von Tassen darauf Platz hat.

In jeder Platte 4, 5 befindet sich jeweils eine Austrittsöffnung 9, 10 durch die beim Erhitzen des Wassers gebildeter Wasserdunst oder Wasserdampf aus dem Wasserbehälter 1 hindurchströmen kann. Es können jeweils aber auch zwei oder mehrere, beispielsweise nach Art eines Siebes nebeneinander liegende Austrittsöffnungen vorgesehen sein. Die Austrittsöffnungen 9, 10 sind so angeordnet, daß sie jeweils vom Tassenhohlraum der mit ihrem Tassenrand auf den Platten 4, 5 der Abstellfläche 3 aufliegenden Tassen 7, 8 überdeckt werden können. Am tiefsten Punkt der Abstellfläche 3 befindet sich an der Nahtstelle der Platten 4, 5 eine Ablauföffnung 10, durch die Kondenswasser abfließen kann. Unterhalb der Ablauföffnung 11 ist an der der Abstellfläche 3 gegenüberliegenden Seite eine Rinne 24 angebracht, die über eine Leitung 25 mit einem darunter angeordneten Auffangbehälter 26 verbunden ist (gestrichelt dargestellt). Hierdurch fließt das Kondenswasser nicht in den Wasserbehälter 1 sondern seitlich daran herunter. Um zu verhindern, daß durch die stets offene Ablauföffnung 11 Wasserdunst oder Wasserdampf nach außen nutzlos entweicht, kann die unterhalb der Ablauföffnung 11 angeordnete Rinne 24 geschlossen zu den Platten 4, 5 hin verlaufen, so daß die Ablauföffnung 11 keine Verbindung zum offenen Wasserbehälter 1 hat.

Die Funktionsweise der beschriebenen Vorrichtung ist wie folgt:
Wird das Wasser im Wasserbehälter 1 mittels der Heizspirale 2 aufgeheizt, so entsteht je nach Aufheiztemperatur Wasserdunst oder Wasserdampf, der aufsteigt und durch die Austrittsöffnungen 9, 10 in den Flächenabschnitten 4, 5 der Abstellfläche 3 in das Innere der mit ihrem Tassenrand auf den Flächenabschnitten 4, 5 aufliegenden Tassen 7, 8 gelangt. Durch Konvektion und Kondensation des Wasserdunstes bzw. Wasserdampfes werden die Tassen 7, 8 erwärmt. Versuche ergaben, daß in Abhängigkeit vom erhitzten Wasservolumen - je kleiner das Wasservolumen, desto kürzer die Erhitzungszeit - in ca. 4 Minuten Tassentemperaturen von etwa 50 Grad Celsius erreicht werden, wenn die Temperatur des Wassers im Wasserbehälter 1 unterhalb der Siedetemperatur bleibt. Sofern das Wasser im Wasserbehälter 1 zum Sieden gebracht wird, so können Tassentemperaturen von etwa 65 Grad Celsius erreicht werden.

Beim Erwärmen der Tassen 7, 8 kondensiert durch die Temperaturdifferenz Wasserdunst und Wasserdampf im Innern der Tassen 7, 8. Das Kondenswasser fließt auf die Abstellfläche 3 der Platten 4, 5, sammelt sich wegen ihrer Neigung am tiefsten Punkt und fließt durch die dort angeordnete Ablauföffnung 11 in den Wasserbehälter 1.

Figur 2 zeigt eine andere Ausführungsform einer Vorrichtung zum Erwärmen und Warmhalten von Tassen mit einer Dampfverteilkammer 12, die an ihrem unteren Ende über einen Anschluß 13 mit einem nicht dargestellten Dampferzeuger verbunden ist. Der Dampferzeuger kann beispielsweise ein Druckboiler oder ein Thermoblock eines Heißwasserbereiters sein, die zur ausschließlichen Tassenvorwärmung z.B. durch einen Schalter oder eine separate Schalterstufe "Tassenvorwärmung" mit reduzierter Energiezufuhr zur Erzeugung von Wasserdampf oder Wasserdunst betrieben werden können.

Die Dampfverteilkammer 12 ist an ihrer Oberseite mit einem plattenförmigen Element 14 verschlossen, welches zwei zur Mitte leicht geneigte Abstellflächen 15, 16 aufweist, die durch eine Längsrippe 17 voneinander getrennt sind. Jede Abstellfläche 15, 16 weist Austrittsöffnungen auf, von denen in der Zeichnung nur eine Austrittsöffnung 18 in der Abstellfläche 15 sichtbar ist. Die Austrittsöffnung 18 ist durch eine Klappe 19 verschließbar, die sich in die Dampfverteilkammer 12 erstreckt und die am Ende eines zweiarmigen Hebels 20 angeordnet ist. Der Hebel 20 ist innerhalb der Dampfverteilkammer 12 auf einem Zapfen 21 schwenkbar gelagert. An dem der Klappe 19 entgegengesetzten Hebelarm ist eine Druckfeder 22 wirksam, die an dem Element 14 abgestützt ist und eine solche Vorspannung hat, daß die Klappe 19 in ihrer Schließstellung gehalten wird, wenn die Abstellfläche 15 leer ist.

Wird, wie in der Zeichnung dargestellt, auf der Abstellfläche 15 eine Tasse 23 abgestellt, so wird die Klappe 19 durch das Gewicht der Tasse 23 gegen die Vorspannkraft der Druckfeder 22 nach unten in die Dampfverteilkammer 12 hineingedrückt, wodurch die Austrittsöffnung 18 freigegeben wird, so daß Wasserdampf in den Hohlraum der Tasse 23 einströmen kann. Durch Kondensation im Innern der Tasse 23 entstehendes Kondenswasser kann bedingt durch die Neigung der Abstellfläche 15 durch die Austrittsöffnung 18 in die Dampfverteilkammer 12 abfließen und gelangt von dort in einen von dem Dampferzeuger 2 separat angeordneten Auffangbehälter 26 zurück, wie dies in Fig. 1 dargestellt ist. Wird die Tasse 23 weggenommen oder rutscht sie im Falle eines Umkippens des Gerätes ab, so gelangt die Klappe 19 durch die Vorspannkraft der Druckfeder 22 selbsttätig in ihre Schließstellung und hält die Austrittsöffnung 18 geschlossen, so daß kein Wasserdampf oder Wasser in größeren Mengen mehr austreten kann.

## Patentansprüche

1. Kaffeemaschine mit einer Vorrichtung zur Erwärmung von mindestens einer auf einer Abstellfläche (3; 15,16) abgestellten Tasse (7, 8, 23) und einer Wärmequelle (2), durch die Wasser in einem Wasserbehälter (1) auf eine solche Temperatur erwärmbar ist, daß Wasserdunst und/oder Wasserdampf entsteht, der einer auf der Abstellfläche (3; 15, 16) ruhenden Tasse (7, 8, 23) zuführbar ist und diese dabei erwärmt,
**dadurch gekennzeichnet**,
daß die Austrittsöffnungen (9, 10) so angeordnet sind, daß sie jeweils vom Tassenhohlraum der mit ihrem Tassenrand auf den Platten (4, 5) der Abstellfläche (3) aufliegenden Tassen (7, 8) überdeckt werden können.

2. Kaffeemaschine nach Anspruch 1,
**dadurch gekennzeichnet**,
daß der Wasserbehälter (1) offen ist und daß während der Beheizung ständig Wasserdunst und/oder Wasserdampf aus dem Wasserbehälter (1) über eine einer Tasse zugeordneten Austrittsöffnung (9, 10, 18) aufsteigen kann.

3. Kaffeemaschine nach Anspruch 1,
**dadurch gekennzeichnet**,
daß die Abstellfläche (3, 15, 16) gegenüber der Horizontalen geneigt ist.

4. Kaffeemaschine nach Anspruch 3,
**dadurch gekennzeichnet**,
daß die Abstellfläche (3, 15 16) aus zwei oder mehreren entgegengesetzt geneigten Platten (4, 5) besteht.

5. Kaffeemaschine nach Anspruch 3,
**dadurch gekennzeichnet**,
daß die Abstellfläche (3, 15, 16) an ihrem tiefsten Punkt eine Auffangvorrichtung (24) für Kondenswasser hat.

6. Kaffeemaschine nach Anspruch 5,
**dadurch gekennzeichnet**,
daß als Auffangvorrichtung (24) eine oder mehrere Ablauföffnungen (11) und/oder eine Rinne vorgesehen ist (sind), die über eine Leitung (25) in einen zusätzlichen Auffangbehälter (26) mündet(n).

7. Kaffeemaschine nach Anspruch 1,
**dadurch gekennzeichnet**,
daß die Austrittsöffnung (18) in der Abstellfläche (3, 15, 16) in eine unter der Abstellfläche (3, 15, 16) vorgesehenen Dampfverteilkammer (12) mündet, die ihrerseits an einen von der Wärmequelle (2) gespeisten Dampferzeuger angeschlossen ist.

8. Kaffeemaschine nach Anspruch 1,
**dadurch gekennzeichnet**,
daß die Austrittsöffnung (9, 10, 18) in der Abstellfläche (3, 15, 16) durch eine Klappe (19) oder ein Ventil verschließbar ist.

9. Kaffeemaschine nach Anspruch 8,
**dadurch gekennzeichnet**,
daß die Klappe (19) oder das Ventil beim Aufstellen einer Tasse (7, 8, 23) auf die Abstellfläche (3, 15, 16) durch die Tasse (7, 8 23) in ihre Offenstellung bewegt wird.

10. Kaffeemaschine nach Anspruch 9,
**dadurch gekennzeichnet**,
daß die Klappe (19) oder das Ventil durch eine Feder (22) in ihrer Schließstellung gehalten werden, wobei die Federkraft durch das Gewicht einer Tasse (7, 8, 23) überwindbar ist.

11. Kaffeemaschine nach Anspruch 1,
**dadurch gekennzeichnet**,
daß die in der Abstellfläche (3, 15, 16) ausgebildete(n) Austrittsöffnung(en) (9, 10, 18) direkt mit einem von der Wärmequelle (2) gespeisten Dampferzeuger in Verbindung steht (stehen).

12. Kaffeemaschine nach Anspruch 1,
**dadurch gekennzeichnet**,
daß der Wassserbehälter (1) nach oben zur Tasse (7, 8, 23) hin ständig offen ist.

13. Kaffeemaschine nach Anspruch 1,
**dadurch gekennzeichnet**,
daß die Größe der Abstellfläche (3, 15, 16) an die Größe der Öffnung des Wasserbehälters (1) angepaßt ist.

## Claims

1. A coffee maker with a device for heating at least one cup (7, 8; 23) seated on a support surface (3; 15, 16), and a heat source (2) adapted to heat water in a water reservoir (1) to a temperature such that water vapor and/or steam is formed that is deliverable to a cup (7, 8; 23) resting on the support surface (3; 15, 16), heating the cup in the process,
**characterized in that** discharge ports (9, 10) are arranged such as to enable them to be covered by the cavity of the cups (7, 8) having their respective rims resting on the plates (4, 5) providing the support surface (3).

2. The coffee maker as claimed in claim 1,
**characterized in that** the water reservoir (1) is open, enabling water vapor and/or steam to rise continuously during heating from the water reservoir (1) through a respective discharge port (9, 10; 18) associated with a cup.

3. The coffee maker as claimed in claim 1,
**characterized in that** the support surface (3; 15, 16) is inclined relative to the horizontal.

4. The coffee maker as claimed in claim 3,
**characterized in that** the support surface (3; 15, 16) is comprised of two or more plates (4, 5) inclined in opposite directions.

5. The coffee maker as claimed in claim 3,
**characterized in that** the support surface (3; 15, 16) has a collection device (24) for condensed water at its lowermost point.

6. The coffee maker as claimed in claim 5,
**characterized in that** the collection device (24) comprises one or several drain holes (11) and/or a channel which open into an additional collection container (26) through a conduit (25).

7. The coffee maker as claimed in claim 1,
**characterized in that** the discharge port (18) in the support surface (3; 15, 16) opens into a steam distribution chamber (12) provided underneath the support surface (3; 15, 16) and connected in turn to a steam generating means supplied with energy from the heat source (2).

8. The coffee maker as claimed in claim 1,
**characterized in that** the discharge port (9, 10; 18) in the support surface (3; 15, 16) is closable by a flap structure (19) or a valve.

9. The coffee maker as claimed in claim 8,
**characterized in that** the flap structure (19) or the valve is moved to its open position by a cup (7, 8; 23) as the cup (7, 8; 23) is placed on the support surface (3; 15, 16).

10. The coffee maker as claimed in claim 9,
**characterized in that** the flap structure (19) or the valve are maintained in a closed position by a spring (22), the spring force being of a magnitude sufficient to be overcome by the weight of a cup (7, 8; 23).

11. The coffee maker as claimed in claim 1,
**characterized in that** the discharge port(s) (9, 10; 18) provided in the support surface (3; 15, 16) is (are) in direct communication with a steam generating means supplied with energy from the heat source (2).

12. The coffee maker as claimed in claim 1,
**characterized in that** the water reservoir (1) is permanently upwardly towards the cup (7, 8; 23).

13. The coffee maker as claimed in claim 1,
**characterized in that** the size of the support surface (3; 15, 16) conforms to the size of the opening of the water reservoir (1).

## Revendications

1. Machine à café comportant un dispositif pour réchauffer au moins une tasse (7,8,23) posée sur une surface de pose (3; 15,16) et une source de chaleur (2) au moyen de laquelle l'eau contenue dans un réservoir d'eau (1) peut être chauffée et portée à une température telle qu'apparaît de la buée et/ou de la vapeur d'eau qui peut être amenée à une tasse (7, 8, 23) reposant sur la surface de pose (3; 15, 16) et l'y chauffe,
caractérisée
par le fait que les ouvertures de sortie (9, 10) sont disposées de façon qu'elles peuvent être chacune recouvertes par un espace creux de tasse des tasses (7, 8) reposant, par leur bord, sur les plateaux (4, 5) de la surface de pose (3).

2. Machine à café selon la revendication 1,
caractérisée
par le fait que le réservoir d'eau (1) est ouvert et que pendant le chauffage de la buée et/ou de la vapeur d'eau peut monter en permanence, depuis le réservoir d'eau (1), par l'intermédiaire d'une ouverture de sortie (9, 10, 18) correspondant à une tasse.

3. Machine à café selon la revendication 1,
caractérisée
par le fait que la surface de pose (3, 15, 16) est inclinée par rapport à l'horizontale.

4. Machine à café selon la revendication 3,
caractérisée
par le fait que la surface de pose (3, 15,16) est constituée de deux ou plusieurs plateaux (4, 5) inclinés en sens opposé.

5. Machine à café selon la revendication 3,
caractérisée
par le fait que la surface de pose (3, 15, 16) présente, à son point bas, un dispositif de collecte (24) pour l'eau de condensation.

6. Machine à café selon la revendication 5,
caractérisée
par le fait que comme dispositif de collecte (24) sont prévues une ou plusieurs ouvertures d'évacuation (11) et/ou une gouttière qui déboucher, par une conduite (25), dans un réservoir de collecte supplémentaire (26).

7. Machine à café selon la revendication 1,
caractérisée
par le fait que l'ouverture de sortie (18) prévue dans la surface de pose (3, 15, 16) débouche dans une chambre (12) de répartition de la vapeur qui est prévue en dessous de la surface de pose (3, 15, 16) et qui, de son côté, est reliée à un générateur de vapeur alimenté par la source de chaleur (2).

8. Machine à café selon la revendication 1,
caractérisée
par le fait que l'ouverture de sortie (9, 10, 18) prévue dans la surface de pose (3, 15, 16) peut être obturée par un clapet (19) ou une soupape.

9. Machine à café selon la revendication 8,
caractérisée
par le fait que, lorsque l'on pose une tasse (7, 8, 23) sur la surface de pose (3, 15, 16), le clapet (19) ou la soupape est amené par la tasse (7, 8, 23) dans sa position d'ouverture.

10. Machine à café selon la revendication 9,
caractérisée
par le fait que le clapet (19) ou la soupape sont maintenus, par un ressort (22) dans leur position de fermeture, la force du ressort pouvant être surmonté par le poids d'une table (7, 23).

11. Machine à café selon la revendication 1,
caractérisée
par le fait que l'ouverture ou les ouvertures de sortie (9, 10, 18) prévues dans la surface de poser (3, 15, 16) sont en liaison directe avec un générateur de vapeur alimenté par la source de chaleur (2).

12. Machine à café selon la revendication 1,
caractérisée
par le fait que le réservoir d'eau (1) est en permanence ouvert vers le haut en direction de la tasse (7, 8, 23).

13. Machine à café selon la revendication 1,
caractérisée
par le fait que la dimension de la surface de pose (3, 15, 16) est adaptée à la dimension de l'ouverture du réservoir d'eau (1).
